# DEMANDE DE BREVET EUROPEEN

(11) **EP 3 267 319 A1**
(43) Date de publication de la demande: **10.01.2018**
(21) Numéro de dépôt: 17179879.6
(22) Date de dépôt: 05.07.2017
(51) Int. Cl.: G06F 11/36

(54) **PROCÉDÉ DE TEST D'UNE INTERFACE GRAPHIQUE ET SYSTÈME DE TEST ASSOCIÉ**

(30) Priorité: 07.07.2016 FR 1656563
(71) Demandeur: ALSTOM Transport Technologies, 93400 Saint-Ouen (FR)
(72) Inventeur: HOCQUARD, Arnaud, 91570 BIEVRES (FR); DUMAS, Pierre, 29129 PONT-L'ABBE (FR)
(74) Mandataire: Lavoix

(57) **Abrégé**

Ce procédé de test de validation d'une spécification d'une interface graphique consiste à : élaborer (110) un fichier de scénario (FSi) correspondant au test à réaliser, comportant une pluralité d'instructions (lij), en langage de programmation naturel, chaque instruction comportant une fonction, des paramètres et un état attendu (Eij) de l'interface graphique suite à l'application de la fonction ; exécuter (115) automatiquement le test en interprétant le fichier de scénario (FSi) pour générer des commandes à destination d'un moteur propre à interagir avec l'interface graphique et à surveiller l'évolution de son état courant ; et analyser (220) un fichier de résultats (FRi) associant à chaque instruction du fichier de scénario (FSi) un résultat (Rij) correspondant à la comparaison d'un état courant (E'ij) de l'interface graphique suite à l'application de la commande correspondante avec l'état attendu (E'ij).

## Description

L'invention a pour domaine celui des procédés de test d'une interface graphique permettant à un utilisateur d'interagir avec un système de contrôle-commande.

Plus particulièrement, l'invention est dédiée aux tests d'interface graphique que l'on peut trouver dans le domaine ferroviaire.

Jusqu'à présent, les procédés de test d'une interface graphique, visant à vérifier qu'elle satisfait à un certain nombre de spécifications, sont essentiellement réalisés manuellement.

Un tel procédé consiste d'abord à déterminer les spécifications de l'interface graphique à tester.

Il s'agit ensuite de définir un ou plusieurs scénarios permettant de vérifier que l'interface graphique satisfait à telle ou telle spécification. Un scénario regroupe une succession d'évènements, notamment des évènements d'interaction d'un opérateur avec l'interface graphique et des évènements de réaction de l'interface graphique suite à une interaction.

Il s'agit ensuite, conformément à un scénario choisi d'effectuer un test de l'interface graphique. Pour ce faire, un opérateur réalise la succession d'évènements indiquée dans le scénario choisi. En particulier, l'opérateur effectue les évènements d'interaction (déplacement d'un curseur, action associée à la position courante du curseur, données saisies au moyen d'un clavier, etc.) et relève les évènements de réaction qui suivent une interaction (ouverture d'une fenêtre, changement d'état d'un voyant, évolution d'une grandeur affichée, etc.)

Conformément au scénario, l'opérateur vérifie que l'évènement de réaction de l'interface graphique correspond effectivement à l'évènement de réaction attendu et indiqué dans le scénario. Dans le cas d'une vérification négative, l'interface graphique se comporte différemment de ce qui est attendu, l'opérateur renseigne un rapport de test.

A l'issue d'un test, éventuellement répété un certain nombre de fois, l'analyse du rapport de test permet d'identifier les dysfonctionnements de l'interface graphique par rapport à ce qui est attendu et de corriger l'interface graphique en conséquence.

Cette manière de procéder présente un coût important. En effet, il s'agit de faire réaliser par un opérateur un test qui peut présenter une durée longue, et qu'il faut souvent répéter de nombreuses fois pour valider avec certitude une interface.

La qualité de ces tests n'est pas garantie puisqu'ils font intervenir un opérateur, dont la concentration peut ne pas être constante au cours du test.

Enfin, ce type de test est long à réaliser puisqu'un opérateur ne peut travailler efficacement qu'un certain nombre d'heure par jour.

En conséquence, il y a un besoin pour automatiser un tel procédé de test de manière à baisser les coûts de l'étape de validation d'une interface graphique, à augmenter la qualité de cette étape de validation et à réduire les temps de cette étape de validation.

L'invention a pour objet de répondre à ce besoin.

Pour cela, l'invention a pour objet un procédé de test d'une interface graphique, caractérisé en ce qu'il comporte, pour réaliser automatiquement un test de validation d'une spécification de l'interface graphique, les étapes consistants à :
- élaborer un fichier de scénario correspondant au test de validation à réaliser, comportant une pluralité d'instructions rédigées dans un langage de programmation naturel, chaque instruction comportant une fonction, des paramètres de ladite fonction et un état attendu de l'interface graphique suite à l'application de ladite fonction ; exécuter automatiquement le test en interprétant le fichier de scénario de manière à générer une pluralité de commandes à destination d'un moteur propre à interagir avec l'interface graphique et à surveiller l'évolution de l'état courant de l'interface graphique ; et analyser un fichier de résultats associant à chaque instruction du fichier de scénario un résultat correspondant à la comparaison d'un état courant de l'interface graphique suite à l'application de la commande correspondante avec l'état attendu.

Suivant des modes particuliers de réalisation, le procédé comporte plusieurs des caractéristiques suivantes, prises isolément ou suivant toutes les combinaisons techniquement possibles :
- l'étape consistant à exécuter le test comporte les étapes consistant à : interpréter, par un pilote, le fichier de scénario, en lisant chaque instruction du fichier de scénario, en retirant d'une instruction les termes génériques du langage naturel utilisé pour écrire l'instruction et en ne considérant que la fonction de cette instruction et les paramètres de cette fonction, de manière à générer une commande correspondante ; transmettre la commande et l'état attendu de l'interface graphique au moteur.
- l'étape consistant à exécuter le test comporte les étapes consistant à : exécuter, par le moteur, une commande reçue de manière à réaliser l'interaction correspondante sur l'interface graphique ;- surveiller par le moteur, l'interface graphique ; comparer, par le moteur, un état courant de l'interface graphique avec l'état attendu tel que reçu et générer le résultat de la comparaison.
- Procédé dans lequel : en cas de fonctionnement normal de l'interface graphique, c'est-à-dire lorsque l'état courant correspond à l'état attendu, le résultat de la comparaison prend une valeur « OK » ; et en cas de fonctionnement anormal de l'interface graphique, c'est-à-dire lorsque l'état courant diffère de l'état attendu, le résultat de la comparaison prend une valeur « NOK ».
- l'étape consistant à comparer comporte une capture d'écran, par le moteur, de l'interface graphique dans son état courant.

L'invention a également pour objet un système de test d'une interface graphique, caractérisé en ce qu'il est programmé pour exécuter un programme de test propre à mettre en oeuvre un procédé de test conforme au procédé précédent.
- le programme de test comporte un environnement, un pilote et un moteur, tel que : l'environnement permet à un opérateur d'élaborer un fichier de scénario consistant en une liste d'instructions ; le pilote est propre à interpréter chaque instruction du fichier de scénario de manière à générer, pour chaque instruction, au moins une commande équivalentes et à transmettre la commande au moteur ; le moteur est propre à interagir avec l'interface graphique conformément aux commandes reçues et à surveiller l'état courant de l'interface graphique.
- une instruction, écrite dans un langage de script, comporte une fonction, des paramètres de cette fonction, un état attendu de l'interface graphique à la suite de l'application de cette fonction, et des termes génériques permettant à l'instruction de correspondre à un langage naturel.

L'invention et ses avantages seront mieux compris à la lecture de la description détaillée qui va suivre d'un mode de réalisation particulier, donné uniquement à titre d'exemple illustratif et non limitatif, cette description étant faite en se référant aux dessins annexés sur lesquels :
- la figure 1 est une représentation schématique d'un système informatique permettant la mise en oeuvre du procédé de test selon l'invention ; et,
- la figure 2 est une représentation schématique sous forme de blocs du procédé de test selon l'invention.

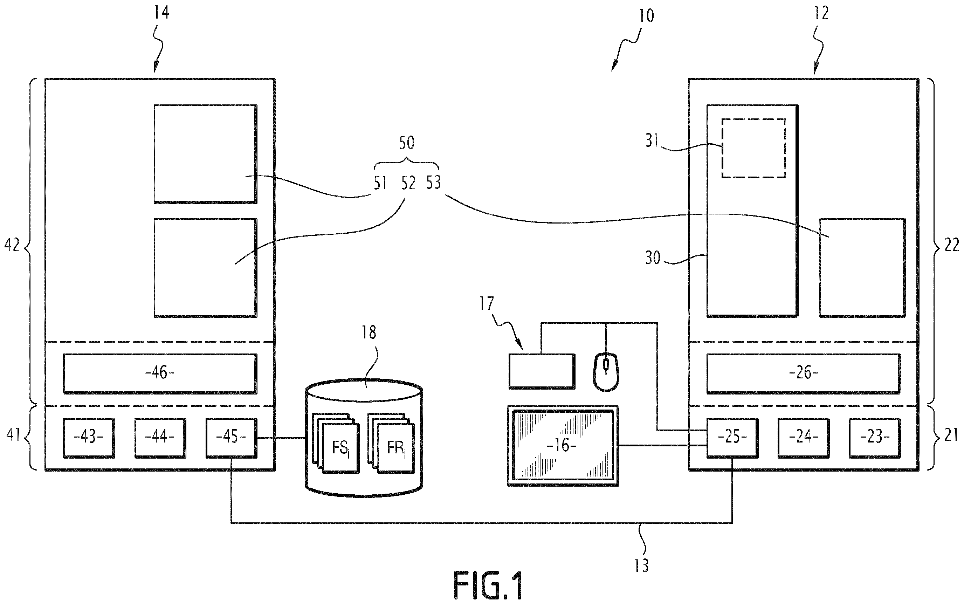

Sur la figure 1, on a représenté schématiquement un système informatique 10 permettant la mise en oeuvre du procédé de test selon l'invention.

Le système 10 comporte un ordinateur de test 12 et un ordinateur de contrôle 14, connectés l'un à l'autre par un réseau de communication 13.

De manière générique, l'ordinateur 12 comporte une couche matérielle 21 et une couche logicielle 22.

La couche matérielle 21 comporte un moyen de calcul 23, tel qu'un processeur, un moyen de mémorisation 24, tel qu'une mémoire, et un moyen d'entrée-sortie 25, en particulier de manière à connecter l'ordinateur 12 au réseau 13, à un écran d'affichage 16 et à des moyens de saisie 17, tels qu'un clavier et un dispositif de pointage, par exemple une souris. Le clavier permet par exemple de saisir dans un champ de saisie une chaîne de caractère. La souris permet de déplacer sur l'écran 16 un curseur et d'effectuer des actions associées à l'endroit où se situe ce curseur (click droit, clic gauche, double-clic, etc.)

Le moyen de mémorisation comporte notamment les instructions de programmes d'ordinateurs propre à être exécutées par le moyen de calcul.

La couche logicielle 22 comporte un programme de virtualisation de la couche matérielle, aussi dénommé système d'exploitation 26, et une pluralité de programmes d'applications exécutés dans l'environnement défini par le système d'exploitation.

De manière similaire, l'ordinateur 14 comporte une couche matérielle 41 et une couche logicielle 42.

La couche matérielle 41 comporte un moyen de calcul 43, tel qu'un processeur, un moyen de mémorisation 44, tel qu'une mémoire, et un moyen d'entrée-sortie 45, en particulier de manière à connecter l'ordinateur 42 au réseau 43 et à une base de données 18.

La couche logicielle 42 comporte un système d'exploitation 46, et une pluralité de programmes d'applications exécutés dans l'environnement défini par le système d'exploitation.

Sur l'ordinateur de test 12 est exécutée une application opérationnelle 30 comportant une partie d'interface graphique 31, destinée à être affichée sur l'écran 16 au cours de l'exécution de l'application 30 pour présenter des données à un opérateur et à permettre à cet opérateur, via les moyens de saisi 17, de saisir des données.

Pour tester l'interface graphique 31, le système 10 comporte un programme de test 50 réparti entre les ordinateurs 12 et 14.

Le programme de test 50 comporte un environnement de développement 51, un pilote 52 et un moteur 53.

Dans le mode de réalisation représenté sur la figure 1, l'environnement de développement 51 et le pilote 52 sont exécutés sur l'ordinateur de contrôle 14, tandis que le moteur 53 est exécuté sur l'ordinateur de test 12.

Le moteur 53 est propre à interagir avec et à surveiller l'interface graphique 31 affichée sur l'écran 16 contrôlé.

Un tel moteur 53 est connu. Il s'agit par exemple du moteur SIKULI, dans sa version actuelle 1.1+ (disponible à l'adresse: http://sikulix-2014.readthedocs.org/en/latest/index.html).

Le moteur 53 comporte une interface de programmation fournissant une librairie de commandes prédéfinies, chaque commande correspondant à une interaction possible du moteur avec l'interface graphique à surveiller. La combinaison de ces commandes permet de développer une application interagissant automatiquement avec l'interface graphique considérée.

Cependant, ces commandes sont complexes à utiliser.

L'invention consiste notamment à proposer d'encapsuler le moteur 53 dans une couche d'interface permettant d'accéder au moteur 53 plus aisément, notamment en présentant à un opérateur final un environnement permettant le développement d'applications au moyen d'un langage naturel.

Cette couche d'interface est constituée par l'environnement 51 et le pilote 52.

L'environnement 51 permet à un opérateur d'élaborer un fichier de scénario FSi.

Ce fichier consistant en une liste d'instructions Iij.

Chaque instruction est écrite dans un langage de script.

Une instruction Iij comporte une fonction, des paramètres de cette fonction, un état attendu Eij de l'interface graphique à la suite de l'application de cette fonction, et des termes génériques permettant à l'instruction de correspondre à un langage plus naturel pour l'opérateur.

Une fois le fichier de scénario FSi élaboré, il est stocké dans la base de données 18.

L'environnement 51 permet également à l'opérateur de sélectionner un fichier de scénario FSi parmi l'ensemble des fichiers de la base de données 18 et de lancer son exécution.

Le pilote 52 permet l'exécution d'un fichier de scénario FSi. Il est propre à interpréter chaque instruction Iij de ce fichier FSi de manière à générer un message de commande MCij et à appliquer ce dernier au moteur 53 via le réseau 13. Un message de commande MCij comporte une ou plusieurs commandes Cij, équivalentes à la fonction de l'instruction Iij correspondante, et l'état attendu Eij à l'issue de l'application de cette commande Cij.

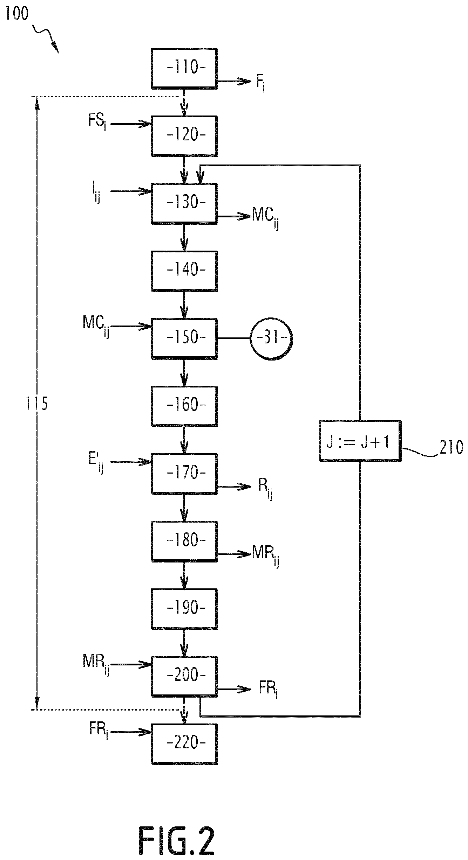

En se référant maintenant à la figure 2, le procédé de test d'une interface graphique 100 selon l'invention va être présenté.

Le procédé 100 débute par une étape 110, hors ligne, consistant à élaborer, à partir d'au moins une spécification que doit respecter l'interface graphique 31, au moins un fichier de scénario Fi adapté. Au moyen de l'environnement 51, un opérateur écrit, en utilisant le langage script, une séquence d'instructions Iij à réaliser.

Le procédé 100 se poursuit par une série d'étapes en ligne, qui correspondent à l'exécution 115 du test proprement dit.

Ainsi, à l'étape 120, l'opérateur choisit de valider une spécification particulière et choisit le fichier de scénario FSi correspondant. Il lance l'exécution du test en transmettant ce fichier de scénario Fi au pilote 52.

A l'étape 130, le pilote 52 interprète le fichier de scénario FSi reçu de manière à réaliser le scénario de test. Pour ce faire, le pilote 52 lit successivement chaque instruction Iij du fichier de scénario FSi et génère à partir de celle-ci un message de commande MCij adapté.

Plus précisément, le pilote 52 retire d'une instruction Iij les termes génériques du langage naturel et ne considère que la fonction de cette instruction et les paramètres de cette fonction, de manière à générer une commande correspondante. Le pilote 52 comporte donc une table de correspondance entre une fonction et une ou plusieurs commandes permettant de réaliser la fonction.

Le pilote 52 élabore alors un message de commande MCij à partir de la commande obtenue et de l'état attendu Eij de l'interface graphique 31, tel qu'indiqué dans l'instruction Iij initiale.

A l'étape 140, le pilote 52 transmet le message de commande MCij au moteur 53.

A l'étape 150, lorsque le moteur 53 reçoit le message de commande MCij, il exécute la ou les commandes contenues dans ce message de manière à réaliser l'interaction correspondante sur l'interface graphique 31.

Cette action peut par exemple consister à déplacer le curseur sur une icône particulière de l'interface graphique 31 et réaliser un double clic, ou à saisir une chaîne de caractère dans un champ de l'interface graphique 31, etc.

A l'étape 160, après l'exécution de la commande, le moteur 53 surveille l'interface graphique 31 de manière à déterminer l'évolution de son état, c'est-à-dire la réaction de l'interface graphique à cette interaction.

A l'étape 170, à l'issue d'une temporisation paramétrable dans l'instruction initiale, ou lors de la détection d'une modification de l'interface graphique 31, le moteur 53 compare l'état courant E'ij de l'interface graphique 31 avec l'état attendu tel qu'indiqué dans le message de commande MCij reçu.

En cas de fonctionnement normal de l'interface graphique 31, c'est-à-dire lorsque l'état courant E'ij correspond à l'état attendu Eij, le moteur 53 génère un résultat Rij associé à l'instruction Iij prenant la valeur « OK ».

En cas de fonctionnement anormal de l'interface graphique 31, c'est-à-dire lorsque l'état courant diffère de l'état attendu, le moteur 53 génère un résultat Rij associé à l'instruction Iij prenant la valeur « NOK ». Le moteur 53 réalise alors une capture d'écran de l'écran 16.

A l'étape 180, le moteur 53 élabore un message de résultats comportant le résultat Rij, la capture d'écran si Rij vaut « NOK », ainsi éventuellement que d'autres informations.

A l'étape 190, ce message de résultat MRij est transmis, via le réseau 13, au pilote 52.

A l'étape 200, lors de la réception d'un message de résultat MRij, le pilote 52 stocke les informations correspondantes dans un fichier de résultats FRi.

Puis, via la boucle 210, le procédé 100 passe à l'exécution de la ligne suivante du fichier de scénario Fi.

Chaque ligne du fichier de scénario est exécutée et le test prend fin lorsque l'ensemble des instructions de fichier de scénario Fi ont été réalisées.

Dans l'étape 220, hors ligne, l'opérateur peut lancer une analyse du fichier de résultats FRi afin de déterminer les écarts entre le comportement prévu et le comportement réel de l'interface graphique 31 de l'application opérationnelle 30 testée.

De nombreuses variantes du système et du procédé sont envisageable par l'homme du métier.

Au lieu d'être répartie sur deux ordinateurs, l'application de test est exécutée sur un unique ordinateur, hébergeant également l'application dont l'interface graphique est à tester.

L'application dont l'interface graphique est à tester peut nécessiter au cours du test l'accès à d'autres systèmes informatique ou à des périphériques adaptées. Ceux-ci sont alors connectés à l'ordinateur de test ou émuler de manière à fournir les données voulues.

Tous types d'interfaces graphiques et d'interactions avec une interface graphique peuvent être testés au moyen de la présente invention.

Avantageusement, l'ordinateur de test 14 est configuré pour tester successivement une pluralité d'ordinateurs de contrôle 12.

L'ordinateur de test 12 est, par exemple, destiné à être utilisé dans un centre de supervision de véhicules ferroviaires et l'interface graphique est alors destinée à présenter lorsqu'elle est affichée sur l'écran 16 des informations relatives à la circulation des véhicules ferroviaires dans un réseau ferroviaire.

Le moteur 53 est notamment propre à effectuer des recherches de sous-images de référence, mémorisées par le moyen de mémorisation 24, dans une image correspondant à l'interface graphique 31 affichée sur l'écran 16.

Les sous-images de références sont des images propres à être comprises dans l'image correspondant à l'interface graphique 31, notamment lorsque certaines actions sont réalisées via les moyens de saisie 17.

A cet effet, l'interface graphique et notamment la zone de l'écran affichant l'interface graphique est, par exemple, décomposée en un ensemble de points appelés pixels. Chaque image correspondant à l'interface graphique est alors codée sous la forme d'une succession d'ensembles de bits et comprend autant d'ensembles de bits que de pixels de la zone de l'écran affichant l'interface graphique. La valeur de chaque ensemble de bits correspond à la couleur d'un pixel donné.

De même, chaque sous-image est codée sous la forme d'une succession d'ensembles de bits.

Dans la suite de la description on considère que la taille de chaque image correspondant à l'interface graphique est identique et que chaque sous-image a des dimensions inférieures ou égales à la taille des images correspondant à l'interface graphique.

Le moteur 53 comprend avantageusement des moyens de comparaison de l'image affichée sur l'interface graphique 31 avec les sous-images de référence mémorisées par le moyen de mémorisation 24.

Le moteur 53 est, par exemple, propre à comparer la succession d'ensembles de bits de l'image correspondant à l'interface graphique 31 affichée sur l'écran 16 avec la succession d'ensemble de bits de l'une des sous-images de référence, afin d'identifier la présence de la sous-image de référence dans l'image affichée sur l'écran 16 et la position de la sous-image de référence sur l'écran, c'est-à-dire notamment une zone de l'interface graphique et notamment de l'écran où la sous-image de référence a été localisée.

Dans la description ci-dessus on entend, par exemple, par état attendu Eij de l'interface graphique, un pointeur vers une sous-image de référence mémorisée par le moyen de mémorisation 24. Avantageusement, l'état attendu comprend également, par exemple, une information de position de la sous-image, par exemple, par rapport à un point de référence de l'écran et/ou de l'interface graphique.

Avantageusement encore, lors de l'étape 110 présentée ci-dessus, les sous-images de référence sont, par exemple, mémorisées. Les sous-images de références correspondent, par exemple, à des images capturées lors du fonctionnement ou du développement de l'interface graphique et mémorisées pour pouvoir ensuite tester l'interface graphique et l'écran. Les sous-images de références comprennent par exemple une première et une deuxième sous-images de référence.

Avantageusement, lors l'étape 150, le moteur 53 exécute, par exemple, les actions suivantes consistant à :
- rechercher la première sous-image de référence dans l'image affichée sur l'écran et correspondant à l'interface graphique,
- identifier la position de la première sous-image de référence recherchée sur l'image affichée à l'écran, la première sous-image correspondant, par exemple, à une icône particulière affichée sur l'écran,
- effectuer une opération de sélection à la position identifiée, l'opération de sélection modifiant l'image affichée sur l'écran; Cette étape consiste, par exemple, à déplacer le curseur à la position identifiée et réaliser un double clic, ou réaliser un clic suivi de la saisie d'une chaîne de caractère à la position identifiée, la sous-image correspondant dans cet exemple précis à un champ de l'interface graphique.

De plus, lors de l'étape 160, le moteur 53 recherche, par exemple, la deuxième sous-image de référence dans l'image affichée sur l'écran et correspondant à l'interface graphique. La deuxième sous-image de référence correspond, par exemple, à un élément affiché dans l'interface graphique suite à la réalisation d'un double clic sur une icône correspondant à la première sous-image de référence.

Avantageusement, lors de l'étape 170, dans le cas où la deuxième sous-image de référence a été identifiée, trouvée lors de l'étape 160, le moteur 53 génère un résultat Rij associé à l'instruction Iij prenant la valeur « OK ».

En cas de non identification de la deuxième sous-image de référence, le moteur 53 génère un résultat Rij associé à l'instruction Iij prenant la valeur « NOK ». Le moteur 53 réalise alors, par exemple, une capture d'écran de l'écran 16 au niveau de l'interface graphique 31.

Avantageusement, suite à l'identification de la position où la première sous-image de référence est affichée, ou de la zone où la première sous-image est affichée, cette position est mémorisée lors de l'étape 150 et associée à la dite première sous-image de référence. Ainsi, lors d'une recherche suivante de la première sous-image de référence au niveau de l'image affichée correspondant à l'interface graphique, la recherche sera effectuée uniquement ou en premier lieu au niveau de la position/zone identifiée et non dans toutes l'image. Le temps d'exécution de la recherche est donc réduit.

Avantageusement encore, une même instruction Iij permet de rechercher une sous-image de référence et de mémoriser sa position a sa première exécution et, lors de sa deuxième exécution, de rechercher la sous-image uniquement à la position identifiée mémorisée.

Avantageusement, les caractères sont traités comme des sous-images de référence de sorte que l'identification de caractères est simplifiée. On associe à un ou plusieurs caractères une sous-image de référence.

Avantageusement encore, lors d'une première étape de recherche on identifie la position d'une première sous-image de référence donnant une position de référence et lors d'une deuxième étape de recherche on effectue la recherche d'une deuxième sous-image de référence en fonction de la position identifiée de la première sous-image de référence. On n'effectue, par exemple, la recherche que dans une zone prédéterminée dont la position est définie par rapport à celle de la première sous-image de référence.

Avantageusement encore, pour identifier le clignotement d'une image on effectue avec alternance la recherche d'une première sous-image de référence et la recherche d'une deuxième sous-image de référence, de préférence à une position prédéterminée.

Les modes de réalisation et variantes envisagés ci-dessus sont propres à être combinés entre eux pour donner lieu à d'autres modes de réalisations de l'invention.

## Revendications

1. Procédé de test (100) d'une interface graphique (31), **caractérisé en ce qu'**il comporte, pour réaliser automatiquement un test de validation d'une spécification de l'interface graphique, les étapes consistants à :
- élaborer (110) un fichier de scénario (FSi) correspondant au test de validation à réaliser, comportant une pluralité d'instructions (Iij) rédigées dans un langage de programmation naturel, chaque instruction comportant une fonction, des paramètres de ladite fonction et un état attendu (Eij) de l'interface graphique suite à l'application de ladite fonction ;
- exécuter (115) automatiquement le test en interprétant le fichier de scénario (FSi) de manière à générer une pluralité de commandes à destination d'un moteur (53) propre à interagir avec l'interface graphique et à surveiller l'évolution de l'état courant de l'interface graphique ; et,
- analyser (220) un fichier de résultats (FRi) associant à chaque instruction du fichier de scénario (FSi) un résultat (Rij) correspondant à la comparaison d'un état courant (E'ij) de l'interface graphique suite à l'application de la commande correspondante avec l'état attendu (Eij).

2. Procédé selon la revendication 1, dans lequel l'étape consistant à exécuter (115) le test comporte les étapes consistant à :
- interpréter (130), par un pilote (52), le fichier de scénario (FSi), en lisant chaque instruction (Iij) du fichier de scénario, en retirant d'une instruction les termes génériques du langage naturel utilisé pour écrire l'instruction et en ne considérant que la fonction de cette instruction et les paramètres de cette fonction, de manière à générer une commande correspondante ;
- transmettre (140) la commande et l'état attendu (Eij) de l'interface graphique au moteur (53).

3. Procédé selon la revendication 2, dans lequel l'étape consistant à exécuter (115) le test comporte les étapes consistant à :
- exécuter (150), par le moteur (53), une commande reçue de manière à réaliser l'interaction correspondante sur l'interface graphique (31) ;
- surveiller (160) par le moteur (53), l'interface graphique (31) ;
- comparer (170), par le moteur (53), un état courant (E'ij) de l'interface graphique (31) avec l'état attendu (Eij) tel que reçu et générer le résultat (Rij) de la comparaison.

4. Procédé selon la revendication 3, dans lequel :
- en cas de fonctionnement normal de l'interface graphique (31), c'est-à-dire lorsque l'état courant (E'ij) correspond à l'état attendu (Eij), le résultat (Rij) de la comparaison prend une valeur « OK » ; et,
- en cas de fonctionnement anormal de l'interface graphique (31), c'est-à-dire lorsque l'état courant (E'ij) diffère de l'état attendu (Eij), le résultat (Rij) de la comparaison prend une valeur « NOK ».

5. Procédé selon la revendication 3 ou la revendication 4, dans lequel l'étape consistant à comparer (170) comporte une capture d'écran, par le moteur (53), de l'interface graphique (31) dans son état courant (E'ij).

6. Procédé selon l'une quelconque des revendications précédentes, dans lequel lors de l'étape d'élaboration (110), des sous-images de référence propres à être comprises dans une image correspondant à l'interface graphique (31) sont mémorisées, les sous-images de références comprenant avantageusement au moins une première et une deuxième sous-images de référence.

7. Procédé selon la revendication 6, dans lequel lors de l'étape d'exécution (150), le moteur (53) exécute les actions suivantes consistant à :
- rechercher la première sous-image de référence dans l'image correspondant à l'interface graphique et affichée sur un écran montrant l'interface graphique,
- identifier la position de la première sous-image de référence recherchée sur l'image affichée à l'écran,
- effectuer une opération de sélection à la position identifiée, l'opération de sélection modifiant l'image affichée sur l'écran ;
et dans lequel lors de l'étape de surveillance (160), le moteur (53) recherche la deuxième sous-image de référence dans l'image affichée sur l'écran.

8. Procédé selon la revendication 7, dans lequel suite à l'identification de la position où la première sous-image de référence est affichée, cette position est mémorisée et associée à la dite première sous-image de référence.

9. Procédé selon la revendication 8, dans lequel lors de l'étape de surveillance (160) la recherche de la deuxième sous-image de référence est réalisée en fonction de la position identifiée de la première sous-image de référence.

10. Système de test (10) d'une interface graphique (31), **caractérisé en ce qu'**il est programmé pour exécuter un programme de test (50) propre à mettre en oeuvre un procédé de test conforme à l'une quelconque des revendications 1 à 9.

11. Système selon la revendication 10, dans lequel le programme de test (50) comporte un environnement (51), un pilote (52) et un moteur (53), tel que :
- l'environnement (51) permet à un opérateur d'élaborer un fichier de scénario (FSi) consistant en une liste d'instructions (Iij) ;
- le pilote (52) est propre à interpréter chaque instruction (Iij) du fichier de scénario (FSi) de manière à générer, pour chaque instruction, au moins une commande (Cij) équivalentes et à transmettre la commande au moteur (53) ;
- le moteur (53) est propre à interagir avec l'interface graphique (31) conformément aux commandes reçues et à surveiller l'état courant (E'ij) de l'interface graphique (31).
